# EUROPEAN PATENT APPLICATION

(11) **EP 3 808 881 A1**
(43) Date of publication of application: **21.04.2021**
(21) Application number: 20194529.2
(22) Date of filing: 04.09.2020
(51) Int. Cl.: D01H 1/16, D01H 11/00

(54) **CLEANING APPARATUS FOR HEAT DISSIPATION MEMBER OF SPINNING MACHINE**

(30) Priority: 15.10.2019 JP 2019188318
(71) Applicant: Kabushiki Kaisha Toyota Jidoshokki, Kariya-shi, Aichi 448-8671 (JP)
(72) Inventor: KAWASE, Tatsuya, Kariya-shi, Aichi 448-8671 (JP); KITAMURA, Atsushi, Kariya-shi, Aichi 448-8671 (JP)
(74) Representative: TBK

(57) **Abstract**

A cleaning apparatus (30, 60) for a heat dissipation member (22) of a spinning machine (10, 11). The heat dissipation member (22) dissipates heat of a control device (21) of the spinning machine (10, 11). The cleaning apparatus (30, 60) includes a temperature-measuring unit (31) that measures a temperature of the heat dissipation member (22), and a cleaning unit (32, 63) that cleans the heat dissipation member (22). The cleaning unit (32, 63) starts cleaning the heat dissipation member (22) when a temperature measurement result of the temperature-measuring unit (31) satisfies a cleaning-start condition. The cleaning unit (32, 63) stops cleaning the heat dissipation member (22) when a cleaning-stop condition is satisfied after the cleaning unit (32, 63) starts cleaning the heat dissipation member (22).

## Description

### BACKGROUND ART

The present disclosure relates to a cleaning apparatus for a heat dissipation member of a spinning machine, in particular, a cleaning apparatus for a heat dissipation member for dissipating heat of a control device.

A control device such as an inverter is used for controlling a motor for driving a spinning machine. A cooling unit such as a heat sink or a fan is used for cooling such a control device. During operation of the spinning machine, airborne dust is likely to rise and cotton dust is likely to scatter so that a lot of the airborne dust and the cotton dust may float around the spinning machine. Such dust as airborne dust and cotton dust may clog the cooling unit.

A cooling unit disclosed in Japanese Patent Application Publication No. H08-170232 is provided by a fan installed near an air inlet opening. The fan is counter-rotated to remove the dust that clogs the air inlet opening when an approach of an automatic cleaner to the fan is detected.

In a case where a cooling unit is provided by a heat sink serving as a heat dissipation member, the dust such as the airborne dust and the cotton dust may clog spaces between fins of the heat sink to decrease cooling efficiency. If the heat sink is clogged with the dust, an operator needs to clean the heat sink, which increases the number of man-hours of the operator.

The present disclosure has been made in view of the above circumstances, and an object of the present disclosure is to provide a cleaning apparatus for a heat dissipation member of a spinning machine, which is capable of automatically cleaning the heat dissipation member that cools a control device of the spinning machine and of reducing the number of man-hours of an operator.

### SUMMARY

In accordance with an aspect of the present disclosure, there is provided a cleaning apparatus for a heat dissipation member of a spinning machine. The heat dissipation member dissipates heat of a control device of the spinning machine. The cleaning apparatus includes a temperature-measuring unit that measures a temperature of the heat dissipation member, and a cleaning unit that cleans the heat dissipation member. The cleaning unit starts cleaning the heat dissipation member when a temperature measurement result of the temperature-measuring unit satisfies a cleaning-start condition. The cleaning unit stops cleaning the heat dissipation member when a cleaning-stop condition is satisfied after the cleaning unit starts cleaning the heat dissipation member.

Other aspects and advantages of the disclosure will become apparent from the following description, taken in conjunction with the accompanying drawings, illustrating by way of example the principles of the disclosure.

### BRIEF DESCRIPTION OF THE DRAWINGS

The disclosure, together with objects and advantages thereof, may best be understood by reference to the following description of the embodiments together with the accompanying drawings in which:
FIG. 1 is a schematic view showing an automatic cleaning apparatus for a heat dissipation member of a spinning machine according to first to third embodiments of the present disclosure; and
FIG. 2 is a schematic view showing an automatic cleaning apparatus for a heat dissipation member of a spinning machine according to a fourth embodiment of the present disclosure.

### DETAILED DESCRIPTION OF THE EMBODIMENTS

### First embodiment

The following will describe a cleaning apparatus for a heat dissipation member of a spinning machine according to a first embodiment of the present disclosure in detail with reference to the accompanying drawing.

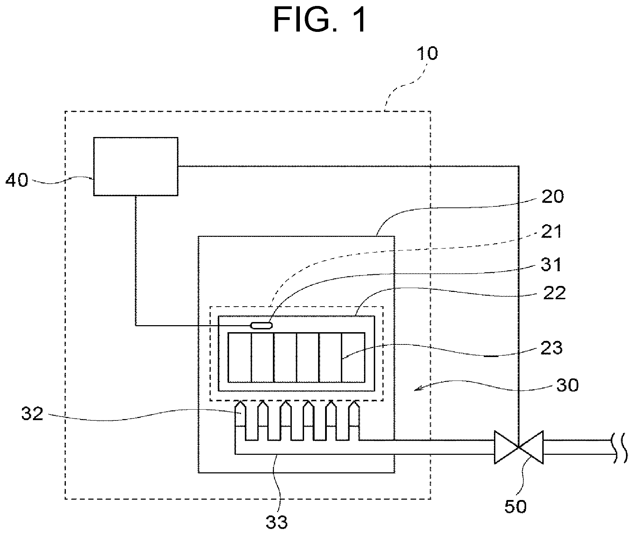

FIG. 1 is a schematic view showing a configuration of the cleaning apparatus for the heat dissipation member of the spinning machine according to the first embodiment of the present disclosure. A spinning machine 10 includes an inverter box 20. An inverter 21 accommodated in the inverter box 20 forms a control device that controls a motor (not shown) for driving various components of the spinning machines 10. A heat sink 22 is attached to the inverter box 20 as a cooling unit for dissipating heat to cool the inverter 21. The heat sink 22 has a plurality of fins 23 arranged parallel to the vertical direction. The heat sink 22 forms a heat dissipation member. The inverter box 20 includes a fan (not shown) that outwardly releases air warmed by the heat of the inverter 21. The fan is disposed so as to release air obliquely upward from below the heat sink 22, and released air and surrounding air cool the heat sink 22.

The spinning machine 10 includes a cleaning apparatus 30 for cleaning the heat sink 22. The cleaning apparatus 30 includes a thermal sensor 31 and air nozzles 32. The thermal sensor 31 is attached to the heat sink 22 and measures a temperature of the heat sink 22. The thermal sensor 31 is connected to a spinning-machine control device 40 that controls the whole spinning machine 10. The thermal sensor 31 forms a temperature-measuring unit.

The air nozzles 32 are disposed below the heat sink 22. Each of the air nozzles 32 is disposed between any two of the fins 23 adjacent to each other so that air jetted from the air nozzles 32 pass through between the any two of the fins 23 adjacent to each other. The air nozzles 32 are connected to an air pipe 33. Plant air that is commonly used with other devices flows through the air pipe 33. The air pipe 33 includes an air valve 50 that is electrically connected to the spinning-machine control device 40. The air nozzles 32 form a cleaning unit.

Operation of the cleaning apparatus for the heat dissipation member of the spinning machine according to the first embodiment will be described below.

During operation of the spinning machine 10, the inverter 21 operates to drive the motor (not shown). The heat generated by operation of the inverter 21 is conducted to the heat sink 22, and surrounding air flows through between the fins 23 of the heat sink 22 so that the heat is dissipated from the heat sink 22 into air around the spinning machine 10. During operation of the spinning machine 10, the thermal sensor 31 measures the temperature of the heat sink 22 and sends a measurement result to the spinning-machine control device 40 at predetermined intervals. The air valve 50 is closed at a start of operation of the spinning machine 10.

During operation of the spinning machine 10, dust such as airborne dust and cotton dust rises in surrounding air. Air flowing through between the fins 23 of the heat sink 22 may cause the dust to clog the spaces between the fins 23. Clogging of the dust may block air flowing through between the fins 23, which causes heat dissipation capacity of the heat sink 22 to deteriorate. This may fail to cool the inverter 21 sufficiently.

When the heat dissipation capacity of the heat sink 22 deteriorates so that the temperature of the heat sink 22 continues to rise, and the thermal sensor 31 measuring the temperature of the heat sink 22 detects a temperature equal to or higher than a predetermined threshold value i.e. a cleaning-start-temperature threshold value, the spinning-machine control device 40 that receives the measurement result opens the air valve 50. Then, the plant air passing through the air pipe 33 is jetted from the air nozzles 32 to start cleaning the heat sink 22. During cleaning, air jetted from the air nozzles 32 flows through between the fins 23 of the heat sink 22 to blow away and remove the dust clogging the spaces between the fins 23. In this way, the heat sink 22 is cleaned.

When the heat sink 22 is cleaned and the dust that clogs the spaces between the fins 23 is removed, the heat dissipation capacity of the heat sink 22 is restored so that the temperature of the heat sink 22 decreases. Then, once the thermal sensor 31 measuring the temperature of the heat sink 22 detects a temperature lower than a predetermined threshold value i.e. a cleaning-stop-temperature threshold value, the spinning-machine control device 40 that receives the measurement result closes the air valve 50. In this way, air jetted from the air nozzles 32 stops so as to stop cleaning the heat sink 22.

According to the first embodiment, the cleaning-stop-temperature threshold value is set lower than the cleaning-start-temperature threshold value. This permits air being continuously jetted from the air nozzles 32 so as to clean the heat sink 22 until the temperature of the heat sink 22 sufficiently decreases, resulting in more thorough cleaning of the dust from the heat sink 22.

As described above, the spinning-machine control device 40 monitors the temperature of the heat sink 22, and when the temperature of the heat sink 22 is equal to or higher than the predetermined cleaning-start-temperature threshold value, the spinning-machine control device 40 determines to start cleaning the heat sink 22 by jetting air from the air nozzles 32. Then, when the temperature of the heat sink 22 is lower than the predetermined cleaning-stop-temperature threshold value, the spinning-machine control device 40 determines to stop cleaning the heat sink 22 by stopping air jetted from the air nozzles 32. In this way, the dust that clogs the spaces between the fins 23 of the heat sink 22 is removed and the failure to cool the inverter 21 sufficiently is recovered. Starting and stopping cleaning the heat sink 22 are automatically determined by the spinning-machine control device 40 and the heat sink 22 is automatically cleaned by air jetted from the air nozzles 32, which results in reducing the number of man-hours of an operator.

As described above, the cleaning apparatus for the heat dissipation member of the spinning machine according to the first embodiment includes the thermal sensor 31 that measures the temperature of the heat sink 22 serving as the heat dissipation member dissipating the heat of the inverter 21, and the air nozzles 32 that clean the heat sink 22. Cleaning of the heat sink 22 starts by jetting air from the air nozzles 32 when the temperature measurement result of the thermal sensor 31 satisfies the cleaning-start condition, and cleaning of the heat sink 22 stops by stopping air jetted from the air nozzles 32 when the cleaning-stop condition is satisfied after the air nozzles 32 start cleaning the heat sink 22. In this way, the cleaning apparatus automatically cleans the heat sink 22 and thereby reduces the number of man-hours of the operator.

The cleaning-start condition is that the temperature measurement result is equal to or higher than the predetermined cleaning-start-temperature threshold value, by which the failure to cool the inverter 21 sufficiently is recovered.

The cleaning-stop condition is that the temperature measurement result is lower than the predetermined cleaning-stop-temperature threshold value, by which cleaning of the heat sink 22 is continued until the temperature of the heat sink 22 decreases after the dissipation capacity of the heat sink 22 is restored. As a result, the dust is cleaned thoroughly from the heat sink 22.

Since the cleaning unit is provided by the air nozzle 32 from which air is jetted to the heat sink 22, necessity for cleaning the cleaning unit itself is small, which reduces a burden of maintenance of the cleaning unit. In addition, since the existing plant air is usable, installation of the cleaning apparatus 30 to the spinning machine 10 is easy, which reduces an installation cost.

In the above-described first embodiment, the cleaning-start-temperature threshold value set for the cleaning-start condition is different from the cleaning-stop-temperature threshold value set for the cleaning-stop condition. However, the cleaning-start-temperature threshold value may be the same as the cleaning-stop-temperature threshold value.

### Second embodiment

The following will describe the cleaning apparatus for the heat dissipation member of the spinning machine according to a second embodiment of the present disclosure. In the description of the following embodiments, detailed description of the components that are assigned with the reference numerals identical to the reference numerals of the first embodiment shown in FIG. 1 will be omitted because these are the same or similar components. The second embodiment is different from the first embodiment in that the cleaning-start-temperature threshold value set for the cleaning-start condition is set based on a rate of change in the temperature of the heat sink 22.

The configuration of the spinning machine 10 is identical to that of the first embodiment as shown in FIG. 1. Operation of the cleaning apparatus for the heat dissipation member of the spinning machine according to the second embodiment will be described below.

Like the first embodiment, the thermal sensor 31 sends the temperature of the heat sink 22 to the spinning-machine control device 40 at predetermined intervals. On the other hand, a load applied to the motor varies depending on the operating state of the spinning machine 10, and accordingly, an amount of current supplied from the inverter 21 to the motor varies. Therefore, an amount of the heat produced by the inverter 21 is not constant. Because of this, the temperatures of the inverter 21 and the heat sink 22 may surge to fail to cool the inverter 21 sufficiently depending on the operating state of the spinning machine 10, even without any change in the deterioration of the heat dissipation capacity of the heat sink 22.

In addition, if the environment around the spinning machine 10 and the like worsens and accordingly dust clogging of the heat sink 22 worsens, the heat dissipation capacity of the heat sink 22 may significantly deteriorate and the temperatures of the inverter 21 and the heat sink 22 may significantly surge even without any change in the operating state of the inverter 21, which may fail to cool the inverter 21 sufficiently.

To interfere with the above possible failure, the spinning-machine control device 40 computes the rate of change in the temperature of the heat sink 22 with respect to a predetermined unit time, based on the temperature measurement result of the heat sink 22. Then, the spinning-machine control device 40 analyzes the rate of change in the temperature of the heat sink 22 and sets the cleaning-start-temperature threshold value. For example, when the rate of change in the temperature is high, the spinning-machine control device 40 sets the cleaning-start-temperature threshold value lower than the cleaning-start-temperature threshold value when the rate of change in the temperature is low. Then, when the temperature measurement result of the thermal sensor 31 becomes equal to or higher than the cleaning-start-temperature threshold value that is set low, the spinning-machine control device 40 controls the air valve 50 to open so as to jet air from the air nozzles 32 to the heat sink 22 to start cleaning the heat sink 22. In this way, even if the rate of change in the temperature of the heat sink 22 is high and the temperature of the heat sink 22 surges, the heat dissipation capacity of the heat sink 22 is restored by cleaning the heat sink 22 in the early stage.

When the rate of change in the temperature is low, the spinning-machine control device 40 sets the cleaning-start-temperature threshold value higher than the cleaning-start-temperature threshold value when the rate of change in the temperature is high. Then, when the temperature measurement result of the thermal sensor 31 becomes equal to or higher than the cleaning-start-temperature threshold value that is set high, the spinning-machine control device 40 controls the air valve 50 to open so as to jet air from the air nozzles 32 to the heat sink 22 to start cleaning the heat sink 22. In this way, when the rate of change in the temperature of the heat sink 22 is low so that the temperature of the heat sink 22 slowly increases, start of cleaning the heat sink 22 is delayed, which saves the plant air.

The rate of change in the temperature of the heat sink 22 may be analyzed and a specific value for the cleaning-start-temperature threshold value based on the rate of change in the temperature by the spinning-machine control device 40 may be set, based on an empirical parameter obtained in a test or based on a parameter or a model obtained by learning such as machine learning. Other operations are the same as those of the first embodiment.

As described above, the cleaning-start condition is that the temperature measurement result is equal to or higher than the cleaning-start-temperature threshold value set based on the rate of change in the temperature obtained by the temperature measurement result, which allows the spinning-machine control device 40 to start cleaning the heat sink 22 at a desirable timing corresponding to the change in the operating state of the inverter 21 and the change in the heat dissipation capacity of the heat sink 22.

### Third embodiment

The following will describe the cleaning apparatus for the heat dissipation member of the spinning machine according to a third embodiment of the present disclosure. The third embodiment is different from the first and second embodiments in that time data measured by a timer is set for the cleaning-stop condition.

The spinning-machine control device 40 according to the third embodiment includes the timer (not shown). The configuration of the spinning machine 10 other than the timer is identical to that of the first embodiment as shown FIG. 1. Operation of the cleaning apparatus for the heat dissipation member of the spinning machine according to the third embodiment will be described below.

When the spinning-machine control device 40 opens the air valve 50 to start cleaning the heat sink 22, the timer of the spinning-machine control device 40 measures an elapsed time since the air valve 50 is opened. When the elapsed time measured by the timer becomes equal to or longer than a predetermined time threshold value set for the cleaning-stop condition, the spinning-machine control device 40 closes the air valve 50 to stop cleaning the heat sink 22. Other operations are the same as those of the cleaning apparatus according to the first and second embodiments.

As described above, the cleaning-stop condition is that the elapsed time is equal to or longer than the predetermined time threshold value. Therefore, when the temperature of the heat sink 22 becomes equal to or higher than the cleaning-start-temperature threshold value, the heat sink 22 is thoroughly cleaned during the predetermined time threshold value.

In the above-described third embodiment, the cleaning-stop condition is that the elapsed time since the air valve 50 is opened becomes equal to or longer than the time threshold value. However, the elapsed time may be measured since other reference time. For example, the reference time may be when the temperature of the heat sink 22 decreases to a predetermined temperature, and the cleaning-stop condition may be that the elapsed time since the above reference time becomes equal to or longer than the time threshold value.

In the above-described first to third embodiments, the air nozzles 32 are disposed below the heat sink 22. However, the air nozzles 32 may be disposed above the heat sink 22 so that air is jetted downward. In the above-described first to third embodiments, the fins 23 of the heat sink 22 are arranged parallel to the vertical direction. However, the fins 23 may be arranged in the horizontal direction. In this case, the air nozzles 32 are arranged so that air is jetted in the horizontal direction.

In the above-described first to third embodiments, a plurality of the air nozzles 32 is provided. However, a single air nozzle 32 may be provided movably within a width of the heat sink 22 so that air is jetted to clean the heat sink 22 while the air nozzle 32 is moving.

### Fourth embodiment

The following will describe a cleaning apparatus for a heat dissipation member of a spinning machine according to a fourth embodiment of the present disclosure. The fourth embodiment is different from the first embodiment in that the cleaning unit is provided by a cleaning tool.

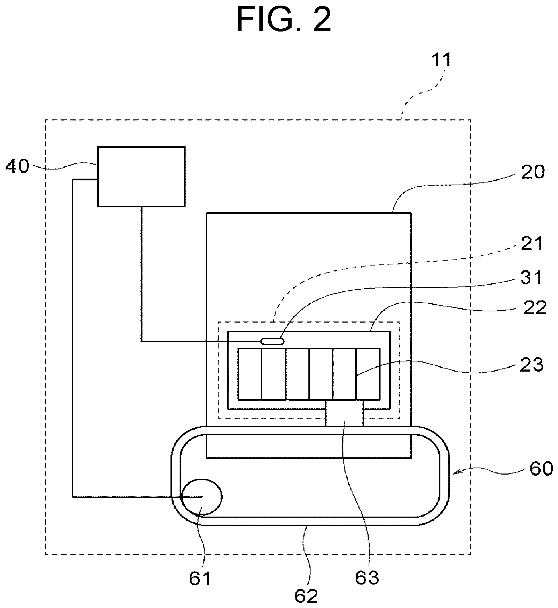

As shown in FIG. 2, a spinning machine 11 includes a cleaning apparatus 60 for cleaning the heat sink 22. The cleaning apparatus 60 includes a motor 61, a belt 62, and a sponge 63.

The motor 61 is electrically connected to the spinning-machine control device 40. The belt 62 forming a circular shape is connected to an output shaft of the motor 61, and is movably driven by the motor 61. The belt 62 extends in a direction orthogonal to a direction in which the fins 23 of the heat sink 22 are arranged parallel to each other. The sponge 63 serving as the cleaning tool is attached to a part of the belt 62 so that the sponge 63 is contactable with lower portions of the fins 23 of the heat sink 22. The sponge 63 forms the cleaning unit. The configuration of the spinning machine 11 other than the cleaning unit is identical to that of the first embodiment.

Operation of the cleaning apparatus for the heat dissipation member of the spinning machine according to the fourth embodiment will be described below.

The motor 61 is inactive when the spinning machine 11 starts operating. Therefore, the belt 62 and the sponge 63 are also inactive.

If the dust clogs the spaces between the fins 23 of the heat sink 22 during operation of the spinning machine 11, the heat dissipation capacity of the heat sink 22 deteriorates, which increases the temperature of the heat sink 22. When the thermal sensor 31 measuring the temperature of the heat sink 22 detects the temperature equal to or higher than the predetermined cleaning-start-temperature threshold value, the spinning-machine control device 40 receives the measurement result and drives the motor 61 in one direction. Accordingly, the belt 62 moves, and the sponge 63 attached to the belt 62 moves in the one direction while being in contact with the lower portions of the fins 23 of the heat sink 22. As a result, the dust clogging the lower portions of the fins 23 of the heat sink 22 is removed by the sponge 63, and the heat sink 22 is cleaned.

When the heat sink 22 is cleaned and the dust that clogs the spaces between the fins 23 is removed, the heat dissipation capacity of the heat sink 22 is restored so that the temperature of the heat sink 22 decreases. Then, when the thermal sensor 31 measuring the temperature of the heat sink 22 detects the temperature lower than the predetermined cleaning-stop-temperature threshold value, the spinning-machine control device 40 receives the measurement result and stops the motor 61. As a result, the belt 62 and the sponge 63 stop to stop cleaning the heat sink 22.

As described above, the cleaning unit is the sponge 63 that is contactable with the heat sink 22, and thus securely cleans the dust that clogs the heat sink 22.

In the above-described fourth embodiment, the cleaning apparatus 60 includes the sponge 63 that serves as the cleaning tool. However, any cleaning tool capable of cleaning the dust may be used instead of the sponge 63, such as a MAGICTAPE (registered trademark), a brush, and an adhesive.

In the above-described cleaning apparatus 60 according to the fourth embodiment, the sponge 63 is moved by the belt 62 that is moved by the motor 61. However, the sponge 63 may reciprocate by driving a driving unit using a rack and pinion driven by the motor 61.

In the above-described fourth embodiment, the motor 61 is driven to move the belt 62 and the sponge 63 in the one direction during cleaning of the heat sink 22. However, the motor 61 may be counter-rotated so that the belt 62 and the sponge 63 reciprocate during cleaning.

In the above-described fourth embodiment, when the thermal sensor 31 measuring the temperature of the heat sink 22 detects the temperature equal to or higher than the predetermined cleaning-start-temperature threshold value, the spinning-machine control device 40 receives the measurement result and drives the motor 61. However, the motor 61 may be continuously driven in the one direction during operation of the spinning machine 11 to move the belt 62 so that the sponge 63 periodically cleans the heat sink 22.

In the above-described fourth embodiment, the cleaning apparatus 60 is configured such that the sponge 63 is contactable with the lower portions of the fins 23 of the heat sink 22. However, the cleaning apparatus 60 may be configured such that the sponge 63 is contactable with upper portions of the fins 23 of the heat sink 22.

In the above-described first to fourth embodiments of the present disclosure, each of the spinning machines 10 and 11 includes the inverter 21 that serves as the control device. However, other type of the control device such as a servo amplifier may be included.

In the above-described first to fourth embodiments, the thermal sensor 31 is used as the temperature-measuring unit to measure the temperature of the heat sink 22. However, other type of the temperature-measuring unit may be used. For example, the temperature-measuring unit may be provided by a unit that obtains a temperature estimation value of the heat sink 22 by estimating a change in temperature of the heat sink 22 based on a current value supplied from the inverter 21 to the motor.

A cleaning apparatus (30, 60) for a heat dissipation member (22) of a spinning machine (10, 11). The heat dissipation member (22) dissipates heat of a control device (21) of the spinning machine (10, 11). The cleaning apparatus (30, 60) includes a temperature-measuring unit (31) that measures a temperature of the heat dissipation member (22), and a cleaning unit (32, 63) that cleans the heat dissipation member (22). The cleaning unit (32, 63) starts cleaning the heat dissipation member (22) when a temperature measurement result of the temperature-measuring unit (31) satisfies a cleaning-start condition. The cleaning unit (32, 63) stops cleaning the heat dissipation member (22) when a cleaning-stop condition is satisfied after the cleaning unit (32, 63) starts cleaning the heat dissipation member (22).

## Claims

1. A cleaning apparatus (30, 60) for a heat dissipation member (22) of a spinning machine (10, 11), the heat dissipation member (22) dissipating heat of a control device (21) of the spinning machine (10, 11), the cleaning apparatus (30, 60) comprising:
a temperature-measuring unit (31) that measures a temperature of the heat dissipation member (22); and
a cleaning unit (32, 63) that cleans the heat dissipation member (22), **characterized in that**
the cleaning unit (32, 63) starts cleaning the heat dissipation member (22) when a temperature measurement result of the temperature-measuring unit (31) satisfies a cleaning-start condition, and
the cleaning unit (32, 63) stops cleaning the heat dissipation member (22) when a cleaning-stop condition is satisfied after the cleaning unit (32, 63) starts cleaning the heat dissipation member (22).

2. The cleaning apparatus (30, 60) for the heat dissipation member (22) of the spinning machine (10, 11) according to claim 1, **characterized in that**
the cleaning-start condition is that the temperature measurement result becomes equal to or higher than a predetermined cleaning-start-temperature threshold value.

3. The cleaning apparatus (30, 60) for the heat dissipation member (22) of the spinning machine (10, 11) according to claim 1, **characterized in that**
the cleaning-start condition is that the temperature measurement result becomes equal to or higher than a cleaning-start-temperature threshold value that is set based on a rate of change in the temperature measurement result.

4. The cleaning apparatus (30, 60) for the heat dissipation member (22) of the spinning machine (10, 11) according to any one of claims 1 to 3, **characterized in that**
the cleaning-stop condition is that the temperature measurement result becomes lower than a predetermined cleaning-stop-temperature threshold value.

5. The cleaning apparatus (30, 60) for the heat dissipation member (22) of the spinning machine (10, 11) according to any one of claims 1 to 3, **characterized in that**
the cleaning-stop condition is that an elapsed time since the heat dissipation member (22) starts cleaning becomes equal to or longer than a predetermined time threshold value.

6. The cleaning apparatus (30, 60) for the heat dissipation member (22) of the spinning machine (10, 11) according to any one of claims 1 to 5, **characterized in that**
the cleaning unit (32) is provided by an air nozzle (32) from which air is jetted to the heat dissipation member (22).

7. The cleaning apparatus (30, 60) for the heat dissipation member (22) of the spinning machine (10, 11) according to any one of claims 1 to 5, **characterized in that**
the cleaning unit (63) is provided by a cleaning tool (63) that is contactable with the heat dissipation member (22).
